# EUROPÄISCHE PATENTSCHRIFT

(11) **EP 0 728 265 B1**
(45) Veröffentlichungstag und Bekanntmachung des Hinweises auf die Patenterteilung: **04.03.1998**
(21) Anmeldenummer: 95919315.2
(22) Anmeldetag: 20.05.1995
(51) Int. Cl.: F16D 48/06

(54) **HYDRAULIKNOTSTEUERUNG FÜR EINE ZWISCHEN EINEM VERBRENNUNGSMOTOR UND EINEM GETRIEBE ANGEORDNETE REIBKUPPLUNG**
HYDRAULIC EMERGENCY CONTROL FOR A FRICTION CLUTCH FITTED BETWEEN AN INTERNAL COMBUSTION ENGINE AND A GEARBOX
COMMANDE HYDRAULIQUE DE SECOURS POUR UN EMBRAYAGE A FRICTION MONTE ENTRE UN MOTEUR A COMBUSTION INTERNE ET UNE BOITE DE VITESSES

(30) Priorität: 14.07.1994 DE 4424790
(43) Veröffentlichungstag der Anmeldung: 28.08.1996
(73) Patentinhaber: ROBERT BOSCH GMBH, 70442 Stuttgart (DE)
(72) Erfinder: BAEUERLE, Peter, D-71636 Ludwigsburg (DE)
(86) Internationale Anmeldenummer: DE9500666
(87) Internationale Veröffentlichungsnummer: WO9602768

(56) Entgegenhaltungen:
- EP-A- 0 324 928
- EP-A- 0 498 210
- DE-A- 3 613 800
- DE-A- 4 120 597
- PATENT ABSTRACTS OF JAPAN vol. 12 no. 73 (M-674) ,8.März 1988 & JP,A,62 215130 (DAIHATSU) 21.September 1987,

## Beschreibung

### Stand der Technik

Die Erfindung geht von einer Hydrauliknotsteuerung nach dem Oberbegriff des Hauptanspruchs aus.

Aus der EP 0 324 928 ist eine Hydrauliknotsteuerung für ein elektronisch gesteuertes, kontinuierlich variables Getriebe (continuously variable transmission, CVT) bekannt, das vorzugsweise in Personenkraftwagen verwendet wird. Ein Teil der Hydrauliknotsteuerung bezieht sich auf die Ansteuerung einer Kupplungsvorrichtung, die einen Fahrzeugmotor mit einem stufenlos arbeitenden Getriebe ohne Zwischenschaltung eines hydrodynamischen Drehmomentwandlers verbindet. Die Steuerung beinhaltet hierzu ein Druckbegrenzungsventil, das bei einem Unterschreiten eines vorgegebenen Pumpendrucks ein Sperrventil öffnet, mit dem es mechanisch gekoppelt ist. Das Sperrventil bringt ein nachgeordnetes Kupplungsventil in seine Rückwärtsstellung, womit die Kupplung öffnet. Bei einem Überschreiten des vorgegebenen Pumpendrucks geht das Sperrventil in Durchgangsstellung. In der Folge wird das Kupplungsventil in Vorwärtsstellung gebracht. Die Kupplung wird geschlossen.

In der EP 0 498 210 A1 wird eine Hydrauliksteuerung beschrieben, bei der ein Reglerventil in Synchronisation mit der Rotation der Maschine operiert. Der hydraulische Druck korrespondiert hierbei zur Rotationsgeschwindigkeit der Maschine. Dieser Druck wird mit Hilfe eines Pitot-Rohrs oder eines Schaltventils erfaßt und in einen das Reglerventil steuerndes Meßsignal umgewandelt.

### Vorteile der Erfindung

Die erfindungsgemäße Hydrauliknotschaltung wird verwendet um eine Reibungskupplung, die eine Naßkupplung sein kann, ohne die Hilfe eines im Normalfahrbetrieb aktiven elektrisch-hydraulischen Kupplungsmanagements zu steuern. Da die Reibungskupplung während des Anfahrvorganges bis zu einer bestimmten unteren Motordrehzahl, ab der für den Fahrzeugantrieb genügend Drehmoment zur Verfügung gestellt wird, die Differenz zwischen der Verbrennungsmotor- und der Antriebsstrangdrehzahl durch Schlupfen ausgleichen muß, werden an die Hydrauliknotschaltung hohe Anforderungen gestellt. Eine geeignete Schaltung, wie sie die erfindungsgemäße Hydrauliknotschaltung darstellt, verhindert ein ungewolltes Abschalten bzw. Abwürgen des Verbrennungsmotors und hält trotz der Verwendung einfacher Schaltungsbauteile den Kupplungsverschleiß während des Einkuppelvorganges durch sanftes Einkuppeln klein. Ein schnelles und sicheres Auskuppeln wirkt ebenfalls verschleißmindernd.

An einer Drosselstelle in einer Arbeitsleitung der Hydrauliknotschaltung wird die für das Öffnen und Schließen der Reibungskupplung relevante Motordrehzahl als Funktion des Druckabfalls abgenommen. Das dazu notwendige Drosselventil läßt sich problemlos in bekannte Hydrauliksteuerungen integrieren.

Ferner verhindert ein Notventil während des Normalfahrbetriebs eine Steuerungsüberlagerung von dem elektrisch-hydraulischen Kupplungsmanagement und der Hydrauliknotsteuerung.

Des weiteren wird mit Hilfe eines vor der Reibungskupplung angeordneten Drosselrückschlagventils in Kombination mit einem hydraulischen Druckspeicher dafür gesorgt, daß bei einem Schließvorgang der Reibungskupplung der Hydrauliköldruck in der Kupplung langsam und definiert ansteigt, wodurch ein ruckfreies Anfahren bei niedriger Kupplungsbeanspruchung ermöglicht wird.

Ein ausreichend schnelles Öffnen der Reibungskupplung bewirkt ein Rückschlagventilteil in dem Drosselrückschlagventil.

### Zeichnungen

Zwei Ausführungsbeispiele der Erfindung sind in den Zeichnungen schematisch in Form von Hydraulikschaltplänen dargestellt und in der nachfolgenden Figurenbeschreibung näher erläutert. Es zeigen
- Figur 1: eine Kupplungsansteuerung mit einem Notventil und zwei Umschaltventilen;
- Figur 2: eine Kupplungsansteuerung mit einem Notventil und einem Umschaltventil.

### Beschreibung der Ausführungsbeispiele

Normalerweise wird entsprechend der Drehzahl und dem Drehmoment des Verbrennungsmotors ein optimaler Kupplungsdruck mit Hilfe einer elektrohydraulischen Steueranlage eingestellt. Bei einem Ausfall der hierzu verwendeten Ansteuerungselektronik gewährleistet die erfindungsgemäße Hydraulikschaltung ein sicheres Anfahren und Abbremsen des Fahrzeugs in einem Notfahrbetrieb.

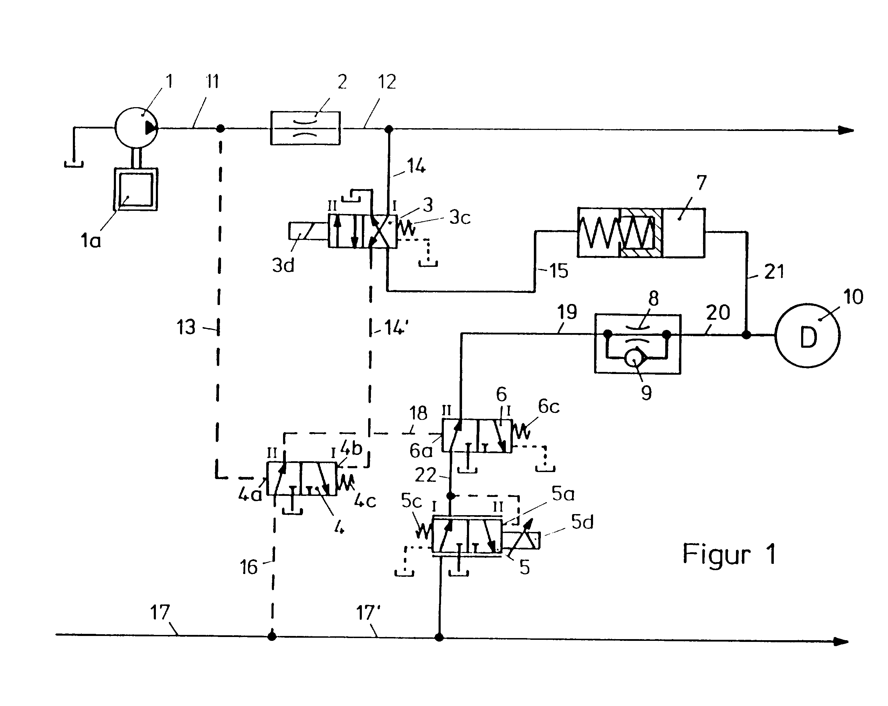

Figur 1 zeigt einen Ausschnitt aus einem Hydraulikschaltplan zur Steuerung einer Naßkupplung (10̸). Im Falle des Notfahrbetriebes sind alle elektrisch angesteuerten Ventile unbestromt, hier ein Notventil (3) und ein Kupplungsdruckventil (5).

Eine von einem eine Abtriebswelle aufweisenden Fahrzeugmotor (1a) angetriebene hydrostatische Pumpe (1) versorgt die Arbeitsleitung (11) mit Hydrauliköl, das sich an einem Drosselventil (2) teilweise zurückstaut. Vor und hinter dem Drosselventil (2) zweigen jeweils eine Leitung (13) und (14) ab. Die Leitung (14) führt über das Notventil (3), ein 4/2-Wegeventil mit einer linksseitigen elektrischen Betätigung (3d) und einer rechtsseitigen Rückstellfeder (3c), und die Steuerleitung (14') zu einem Steueranschluß (4b) eines Umschaltventils (4), einem 3/2-Wegeventil. Die Steuerleitung (13) führt direkt zu diesem Umschaltventil, nämlich zu dessen Steueranschluß (4a).

Da sich die Motordrehzahl und die Pumpenfördermenge zumindest im unteren Drehzahlbereich proportional zueinander verhalten, können bei einem Anfahr- oder Abbremsvorgang den jeweiligen Druckverhältnissen beidseits des Drosselventils (2) bestimmte Motordrehzahlen zugeordnet werden. Bei einem Anfahrvorgang im Notfahrbetrieb wird der Einkupplungsvorgang gestartet, sobald der Druckabfall Δp = p₁₁ - p₁₂ (p₁₁: Druck in der Arbeitsleitung (11); p₁₂: Druck in der Arbeitsleitung (12)) an dem Drosselventil (2) und somit auch die Motcrdrehzahl einen unteren Grenzwert überschritten hat. Der Druck p₁₁ liegt am Steueranschluß (4a) des Umschaltventils (4) an, während das mit dem Druck p₁₂ beaufschlagte Hydrauliköl auf den gegenüberliegenden Steueranschluß (4b) geleitet wird. Das Umschaltventil (4) bewegt sich entgegen der Kraft seiner Rückstellfeder (4c) in die Schaltstellung II und verbindet somit die angeschlossenen Steuerleitungen (16) und (18). Die Steuerleitung (16) wird aus der Hilfsdruckarbeitsleitung (17), die mit der Pumpe (1) über nicht dargestellte Ventile hydraulisch in Verbindung steht, mit Hydrauliköl versorgt. Über das Umschaltventil (4) und die Steuerleitung (18) wird der Steueranschluß (6a) eines weiteren Umschaltventils (6) mit Druck beaufschlagt.

Das Umschaltventil (6), ein 3/2-Wegeventil, das links über den Steueranschluß (6a) hydraulisch angesteuert wird und rechts eine Rückstellfeder (6c) aufweist, wird entgegen der Kraft seiner Rückstellfeder (6c) aus der Schaltstellung I nach rechts in eine Durchflußstellung II für die angeschlossenen Arbeitsleitungen (22) und (19) verschoben. Die Arbeitsleitung (22) steht über ein Kupplungsdruckventil (5) mit der Hilfsdruckarbeitsleitung (17') in Verbindung. Das Kupplungsdruckventil (5), ein 3/2-Wegefühlerventil mit einer linksseitigen Rückstellfeder (5c), einer rechtsseitigen, regelbaren elektrischen Betätigung (5d) einschließlich einer Ausgangsdruckregelung (5a), stellt durch die fehlende Bestromung den maximalen Kupplungsdruck ein. Von der Hilfsarbeitsleitung (19) aus strömt das Hydrauliköl über den Drosselbereich (8) eines Rückschlagdrosselventils (8, 9) und die Hilfsarbeitsleitung (20̸) zu einer Naßkupplung (10̸). Aus der Hilfsarbeitsleitung (20̸) zweigt eine weitere Arbeitsleitung (21) ab, die einen Akkumulator (7) speist. Durch das Zurückweichen des federbelasteten Akkumulatorkolbens steigt der Druck in der Naßkupplung nicht schlagartig, sondern langsam an. Ab einem bestimmten Hydrauliköldruck ist die Naßkupplung geschlossen. Das Hydrauliköl, das sich auf der Rückseite des Akkumulatorkolbens befindet, wird über die Arbeitsleitung (15) und das Notventil (3) in den Tank abgeführt.

Wird nun das Fahrzeug abgebremst, sinkt durch die getriebe- und kupplungsbedingte Kopplung von Motor und Antriebsstrang die Motordrehzahl. Durch die damit verbundene Reduzierung der Pumpenfördermenge nimmt ebenfalls der Druckabfall Δp = p₁₁ - p₁₂ am Drosselventil (2) ab. Unterschreitet Δp einen unteren Grenzwert, so verschiebt sich das Umschaltventil (4) durch die Kraft der Feder (4c) aus der Schaltstellung II in die Schaltstellung I, sofern sich das Notventil (3) ebenfalls noch in seiner Schaltstellung I befindet. Dadurch wird die Steuerleitung (18) entlastet. Das Umschaltventil (6) bewegt sich aus der Schaltstellung II in die Schaltstellung I, wodurch der Hydrauliköldruck in der Naßkupplung (10̸) und in dem Akkumulator (7) auf Null sinkt. Das Hydrauliköl fließt über beide Teile (3) und (9) des Rückschlagdrosselventils (8, 9) und das Umschaltventil (6) in den Tank ab. Das Umschaltventil (6) ermöglicht ein schnelles und sicheres Öffnen der Naßkupplung (10̸), unabhängig von den Hydrauliköldrücken in den Hilfsarbeitsleitungen (19) und (20̸).

Das während des Notfahrbetriebs in Schaltstellung I stehende Notventil (3) ist außerhalb des Notfahrbetriebs elektrisch bestromt. Dadurch befindet es sich im Normalfahrbetrieb in der Schaltstellung II.

In dieser Schaltstellung II wird die Kolbenrückseite des Akkumulators (7) über die Leitungen (12), (14) und (15) mit Hydrauliköl versorgt. Da der Druck in diesen Arbeitsleitungen in der Regel höher ist als in den Hilfsarbeitsleitungen (17, 17'), befindet sich der Kolben des Akkumulators (7), bei nahezu entspannter Arbeitsfeder, an seinem rechten Anschlag. Dadurch wird die Dynamik der Kupplungsansteuerung nicht vom Akkumulator (7) beeinträchtigt.

In der Schaltstellung II des Notventils (3) ist die Steuerleitung (14') mit dem Tank verbunden. Der Druck p₁₁ am Steueranschluß (4a) des Umschaltventils (4) sorgt dafür, daß das Umschaltventil (4) gegen die Kraft der Feder (4c) in der Schaltstellung II gehalten wird. Hierbei ist der Steueranschluß (4b) über das sich in Schaltstellung II befindende Notventil (3) zum Tank entlastet. Dadurch wird ein Öffnen der Naßkupplung (10̸) im Normalfahrbetrieb verhindert.

Das Notventil kann auch ein 3/2-Wegeventil sein, das auf die gleiche Weise wie die 4/2-Wegeventilversion betätigt bzw. angesteuert wird. Die Leitung (14) ist dann im Notfahrbetrieb mit der Steuerleitung (14') verbunden. Im Normalfahrbetrieb ist die Steuerleitung (14') an den Tank angeschlossen. Die Arbeitsleitung (15) entfällt bei dieser Notventilversion. Der kolbenrückseitige Raum des Akkumulators (7) ist direkt über eine Leckleitung mit dem Tank verbunden.

Bei beiden Ventilversionen kann das Notventil auch über ein elektrisches Ventil hydraulisch betätigt werden.

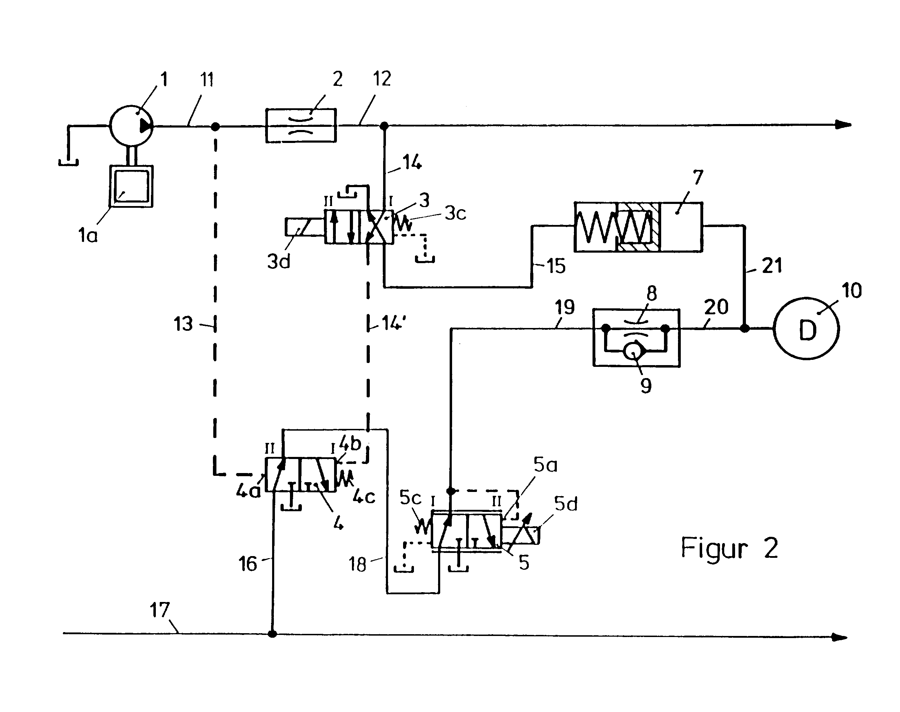

In Figur 2 ist eine Kupplungsansteuerung gezeigt, bei der das drehzahlabhängige Umschaltventil (4) nicht ein weiteres Umschaltventil steuert, sondern das Kupplungsdruckventil (5) unmittelbar aus der Hilfsarbeitsleitung (17) mit Hydrauliköl versorgt. Dazu ist das Umschaltventil (4) über die Arbeitsleitung (18) mit dem Arbeitseingang des Kupplungsdruckventils (5) verbunden. Als Folge hiervon kann das Umschaltventil (6) entfallen, was zu einer preisgünstigen Bauweise der Hydrauliknotsteuerung führt.

## Patentansprüche

1. Hydrauliknotsteuerung für eine zwischen einem Verbrennungsmotor und einem Getriebe angeordnete hydraulisch betätigte Reibungskupplung als Teil einer elektrisch-hydraulischen Kupplungssteuerung, bei der eine hydrostatische Pumpe (1) zur Speisung mindestens einer Arbeitsleitung (11, 12) an einer Abtriebswelle des Verbrennungsmotors angekuppelt ist, dadurch gekennzeichnet, daß in der Arbeitsleitung (11) ein Drosselventil (2) angeordnet ist, daß vor und nach dem Drosselventil (2) jeweils mindestens eine Steuerleitung (13) und (14) abzweigt, wobei die Steuerleitungen (13, 14) mit einem Schaltventil (4) in Verbindung stehen, zur Steuerung oder Bewerkstelligung der Druckbeaufschlagung der Reibungskupplung (10), daß die vor dem Drosselventil (2) liegende Steuerleitung (13) an einem Steuereingang (4a) des Schaltventils (4) angeordnet ist und die nach dem Drosselventil (2) angeordnete Steuerleitung (14) mit einem dem Steuereingang (4a) annähernd gegenüberliegenden zweiten Steuereingang (4b) des Schaltventils (4) hydraulisch in Verbindung steht, wobei auf der diesem Steuereingang (4b) benachbarten Steuerkolbenseite eine Rückstellfeder (4c) angeordnet ist.

2. Hydrauliknotsteuerung gemäß Anspruch 1, dadurch gekennzeichnet, daß das Schaltventil (4) ein Umschaltventil (6) steuert, das Hilfsarbeitsleitungen (19, 20̸) zur Reibungskupplung (10̸) be- und entlastet.

3. Hydrauliknotsteuerung gemäß Anspruch 1 dadurch gekennzeichnet, daß in einer ersten Hilfsarbeitsleitung (19) vor der Reibungskupplung (10̸) ein Drosselrückschlagventil (8, 9) angeordnet ist, dessen Rückschlagventilteil (9) in Richtung Reibungskupplung (10̸) sperrt.

4. Hydrauliknotsteuerung gemäß einem der vorangegangenen Ansprüche, dadurch gekennzeichnet, daß von einer zweiten Hilfsarbeitsleitung (20̸) vor der Reibungskupplung (10̸) eine dritte Hilfsarbeitsleitung (21) zu einem Akkumulator (7) abzweigt.

5. Hydrauliknotsteuerung gemäß Anspruch 4, dadurch gekennzeichnet, daß der Akkumulator (7) einen federbelasteten Trennkolben aufweist und kolbenbodenseitig mit der Kupplung (10̸) sowie federseitig mit dem Tank hydraulisch in Verbindung steht.

6. Hydrauliknotsteuerung gemäß Anspruch 4, dadurch gekennzeichnet, daß der Akkumulator (7) einen federbelasteten Trennkolben aufweist und kolbenbodenseitig mit der Kupplung (10̸) sowie federseitig im Normalfahrbetrieb mit der Arbeitsleitung (12) hydraulisch in Verbindung steht.

7. Hydrauliknotsteuerung gemäß Anspruch 1, dadurch gekennzeichnet, daß das Drosselventil (2) verstellbar ist.

8. Hydrauliknotsteuerung gemäß Anspruch 1, dadurch gekennzeichnet, daß die Rückstellfeder (4c) des Schaltventils (4) einstellbar ist.

9. Hydrauliknotsteuerung gemäß Anspruch 1, dadurch gekennzeichnet, daß ein Notventil (3) den zweiten Steuereingang (4b) des Schaltventils (4) im Normalfahrbetrieb mit dem Tank und im Notfahrbetrieb über die nach dem Drosselventil (2) angeornete Steuerleitung (14) mit der Arbeitsleitung (12) verbindet.

## Claims

1. Hydraulic emergency control for a hydraulically actuated friction clutch, fitted between an internal combustion engine and a gearbox, as part of an electrohydraulic clutch control, in which a hydrostatic pump (1) for feeding at least one working line (11, 12) is coupled to an output shaft of the internal combustion engine, characterized in that a choke valve (2) is arranged in the working line (11), in that at least one control line (13) and (14) branches off in each case upstream and downstream of the choke valve (2), the control lines (13, 14) being connected to a manipulating valve (4) for controlling or effecting the admission of pressure to the friction clutch (10), in that the control line (13) lying upstream of the choke valve (2) is arranged at a control input (4a) of the manipulating valve (4), and the control line (14) arranged downstream of the choke valve (2) is hydraulically connected to a second control input (4b), approximately opposite the control input (4a), of the manipulating valve (4), a restoring spring (4c) being arranged on the spool side adjacent to this control input (4b).

2. Hydraulic emergency control according to Claim 1, characterized in that the manipulating valve (4) controls a reversing valve (6) which loads and relieves auxiliary working lines (19, 20) to the friction clutch (10).

3. Hydraulic emergency control according to Claim 1, characterized in that a non-return choke valve (8, 9) is arranged in a first auxiliary working line (19) upstream of the friction clutch (10), the non-return valve part (9) of which stops the flow in the direction of the friction clutch (10).

4. Hydraulic emergency control according to one of the preceding claims, characterized in that a third auxiliary working line (21) branches off from a second auxiliary working line (20) upstream of the friction clutch (10) and leads to an accumulator (7).

5. Hydraulic emergency control according to Claim 4, characterized in that the accumulator (7) has a springloaded separating piston and is hydraulically connected on the piston-head side to the clutch (10) and on the spring side to the tank.

6. Hydraulic emergency control according to Claim 4, characterized in that the accumulator (7) has a springloaded separating piston and is hydraulically connected on the piston-head side to the clutch (10) and on the spring side during normal driving operation to the working line (12).

7. Hydraulic emergency control according to Claim 1, characterized in that the choke valve (2) is adjustable.

8. Hydraulic emergency control according to Claim 1, characterized in that the restoring spring (4c) of the manipulating valve (4) is adjustable.

9. Hydraulic emergency control according to Claim 1, characterized in that an emergency valve (3) connects the second control input (4b) of the manipulating valve (4) to the tank during normal driving operation and via the control line (14) arranged downstream of the choke valve (2) to the working line (12) during emergency driving operation.

## Revendications

1. Commande hydraulique de secours pour un embrayage à friction à commande hydraulique, monté entre un moteur à combustion interne et une transmission, et faisant partie d'une commande d'embrayage hydroélectrique, dans laquelle une pompe hydrostatique (1) est couplée à un arbre de sortie du moteur à combustion interne pour alimenter au moins une conduite active (11, 12),
caractérisée en ce que
• la conduite active (11) est équipée d'un organe d'étranglement (2)
• en amont et en aval de l'organe d'étranglement (2) dérive au moins une conduite de commande (13 et 14), les conduites de commande (13, 14) communiquent avec une vanne de commutation (4), pour la commande ou la mise en oeuvre de l'embrayage à friction (10),
• la conduite de commande (13) en amont de l'organe d'étranglement (2) est reliée à une entrée de commande (4) de la vanne de commutation (4) et la conduite de commande (14) en aval de l'organe d'étranglement (2) est reliée hydrauliquement à une seconde entrée de commande (4b) de la vanne de commutation (4), sensiblement à l'opposé de l'entrée de commande (4a), et
• un ressort de rappel (4c) est prévu sur le côté du piston de commande voisin de cette entrée de commande (4b).

2. Commande hydraulique de secours selon la revendication 1,
caractérisée en ce que
la vanne de commutation (4) commande une vanne d'inversion (6) qui charge et décharge des conduites auxiliaires (19, 20) vers l'embrayage à friction (10).

3. Commande hydraulique de secours selon la revendication 1,
caractérisée par
un clapet anti-retour (8, 9) monté dans une première conduite auxiliaire (19) en amont de l'embrayage à friction (10) et dont la partie de clapet (9) se bloque en direction de l'embrayage à friction.

4. Commande hydraulique de secours selon l'une des revendications précédentes,
caractérisée en ce qu'
une troisième conduite auxiliaire (21) dérive d'une seconde conduite auxiliaire (20) en amont de l'embrayage à friction (10) pour aller vers un accumulateur (7).

5. Commande hydraulique de secours selon la revendication 4,
caractérisée en ce que
l'accumulateur (7) comporte un piston séparateur chargé par un ressort qui communique avec l'embrayage (10) du côté du fond du piston et, du côté du ressort, communique hydrauliquement avec le réservoir

6. Commande hydraulique de secours selon la revendication 4,
caractérisée en ce que
l'accumulateur (7) comprend un piston séparateur chargé par un ressort, communiquant hydrauliquement du côté du fond du piston avec l'embrayage (10) et, du côté du ressort, en fonctionnement normal, avec la conduite active (12).

7. Commande hydraulique de secours selon la revendication 1,
caractérisée en ce que
l'organe d'étranglement (2) est réglable.

8. Commande hydraulique de secours selon la revendication 1,
caractérisée en ce que
le ressort de rappel (4c) de la vanne de commutation (4) est réglable.

9. Commande hydraulique de secours selon la revendication 1,
caractérisée par
une vanne de secours (3) qui relie, en fonctionnement normal, la seconde entrée de commande (4b) de la vanne de commutation (4) avec le réservoir et, en mode de fonctionnement de secours, par une conduite de commande (14) en aval de l'organe d'étranglement (2), avec la conduite active (12).
